# EUROPEAN PATENT APPLICATION

(11) **EP 4 848 425 A1**
(43) Date of publication of application: **02.12.2026**
(21) Application number: 26170031.4
(22) Date of filing: 31.03.2026
(51) Int. Cl.: H01M 50/176, H01M 50/55, H01M 50/103, H01M 50/531, H01M 50/586

(54) **END COVER ASSEMBLY, ENERGY STORAGE DEVICE, AND POWER CONSUMPTION APPARATUS**

(30) Priority: 30.05.2025 CN 202510725174
(71) Applicant: Xiamen Hithium Energy Storage Technology Co., Ltd., Xiamen, Fujian 361100 (CN)
(72) Inventor: WANG, Changhao, Xiamen, Fujian 361100 (CN); LI, Wenbo, Xiamen, Fujian 361100 (CN)
(74) Representative: DREISS Patentanwälte PartG mbB

(57) **Abstract**

Provided are an end cover assembly, an energy storage device, and a power consumption apparatus. The end cover assembly includes a lower plastic part having two assembly grooves recessed from a side of the lower plastic part in a thickness direction of the lower plastic part, a first pin including a first connection portion with a first positioning hole and a first bent portion, and a second pin including a second connection portion with a second positioning hole and a second bent portion. Bottom wall surfaces of the two assembly grooves are provided with two positioning posts each protruding from the bottom wall surface of the corresponding assembly groove. The first and the second connection portions are mounted at the two assembly grooves, respectively. The two positioning posts pass through the first positioning hole and the second positioning hole, respectively. A vertical distance from a central axis of the first positioning hole to a first connection side surface is unequal to a vertical distance from a central axis of the second positioning hole to a fourth connection side surface; and/or in a length direction of the lower plastic part, a vertical distance from the central axis of the first positioning hole to the first bent portion is unequal to a vertical distance from the central axis of the second positioning hole to the second bent portion.

## Description

### FIELD

The present disclosure relates to the field of energy storage technologies, and in particular, to an end cover assembly, an energy storage device, and a power consumption apparatus.

### BACKGROUND

With the continuous advancement of energy storage technology, increasingly stringent requirements are being placed on mounting accuracy within an energy storage device, particularly concerning mounting accuracy of a pin in an end cover assembly.

In an existing end cover assembly, a pin includes a positive pin connected to a positive tab and a negative pin connected to a negative tab. Moreover, each of the positive pin and the negative pin is required to be mounted at a lower plastic part. During the process of mounting the positive pin and the negative pin at the lower plastic part, a problem of reverse assembly of the positive pin and the negative pin is prone to occur.

### SUMMARY

Embodiments of the present disclosure provide an end cover assembly, an energy storage device, and a power consumption apparatus, which can avoid a problem of reverse assembly of a positive pin and a negative pin during a process of mounting the positive pin and the negative pin at a lower plastic part.

In a first aspect, embodiments of the present disclosure provide an end cover assembly. The end cover assembly includes a lower plastic part, a first pin and a second pin. The lower plastic part includes a body, and the body has a first assembly groove and a second assembly groove that are recessed from a side of the body in a thickness direction of the body. the first assembly groove and the second assembly groove are respectively located at two opposite ends of the lower plastic part in a length direction of the lower plastic part and are spaced apart from each other. A bottom wall surface of the first assembly groove is provided with a first positioning post protruding from the bottom wall surface of the first assembly groove, and a bottom wall surface of the second assembly groove is provided with a second positioning post protruding from the bottom wall surface of the second assembly groove. The first pin includes a first connection portion and a first bent portion. The first bent portion is bent relative to and connected to the first connection portion. The first connection portion includes a first positioning hole extending through two surfaces of the first connection portion in a thickness direction of the first connection portion. The first connection portion has a first connection side surface and a second connection side surface opposite to the first connection side surface. The two surfaces of the first connection portion in the thickness direction of the first connection portion are connected with each of the first connection side surface and the second connection side surface. The second pin includes a second connection portion and a second bent portion. The second bent portion is bent relative to and connected to the second connection portion. The second connection portion includes a second positioning hole extending through two surfaces of the second connection portion in a thickness direction of the second connection portion. The second connection portion has a third connection side surface and a fourth connection side surface opposite to the third connection side surface. The two surfaces of the second connection portion in the thickness direction of the second connection portion are connected with each of the third connection side surface and the fourth connection side surface. The first connection portion is mounted in the first assembly groove, and the first positioning post passes through the first positioning hole. The second connection portion is mounted in the second assembly groove, and the second positioning post passes through the second positioning hole. An orientation of the first connection side surface of the first connection portion is the same as an orientation of the third connection side surface of the second connection portion, and each of the first bent portion and the second bent portion is bent away from the lower plastic part. A vertical distance from a central axis of the first positioning hole to the first connection side surface is defined as a first distance, a vertical distance from a central axis of the second positioning hole to the fourth connection side surface is defined as a second distance, and the first distance is unequal to the second distance; and/or in the length direction of the lower plastic part, a vertical distance from the central axis of the first positioning hole to the first bent portion is defined as a first interval, a vertical distance from the central axis of the second positioning hole to the second bent portion is defined as a second interval, and the first interval is unequal to the second interval.

In some embodiments of the present disclosure, the first positioning hole is located closer to the first connection side surface than the second connection side surface, and the second positioning hole is located closer to the fourth connection side surface than the third connection side surface. The first positioning post and the second positioning post are respectively arranged at two sides of the body in a width direction of the body, and are respectively located adjacent to the two ends of the lower plastic part in the length direction of the lower plastic part.

In some embodiments of the present disclosure, the first pin further includes a first adapter portion connected to an end of the first bent portion away from the first connection portion, and the first adapter portion is angled with the first connection portion. The second pin further includes a second adapter portion connected to an end of the second bent portion away from the second connection portion, and the second adapter portion is angled with the second connection portion. Each of the first adapter portion and the second adapter portion are configured to be electrically connected to an electrode assembly. The first connection portion further includes a first perforation extending through the two surfaces of the first connection portion in the thickness direction of the first connection portion. The first perforation and the first positioning hole are spaced apart from each other, and the first positioning hole is located at a side of the first perforation away from the first adapter portion. The second connection portion further includes a second perforation extending through the two surfaces of the second connection portion in the thickness direction of the second connection portion. The second perforation and the second positioning hole are spaced apart from each other, and the second positioning hole is located at a side of the second perforation away from the second adapter portion.

In some embodiments of the present disclosure, a vertical distance from the central axis of the first positioning hole to a central axis of the first perforation is defined as a first spacing, and a vertical distance from the central axis of the second positioning hole to a central axis of the second perforation is defined as a second spacing. The first spacing is unequal to the second spacing.

In some embodiments of the present disclosure, the first adapter portion includes a first anti-slip groove recessed towards the inside of the first adapter portion from a surface of the first adapter portion in a width direction of the first adapter portion and, and the first anti-slip groove extends through two surfaces of the first adapter portion in a thickness direction of the first adapter portion. The second adapter portion includes a second anti-slip groove recessed towards the inside of the second adapter portion from a surface of the second adapter portion in a width direction of the second adapter portion, and the second anti-slip groove extends through two surfaces of the second adapter portion in a thickness direction of the second adapter portion.

In some embodiments of the present disclosure, a plurality of first anti-slip grooves are provided at two sides of the first adapter portion in the width direction of the first adapter portion. In a length direction of the first adapter portion, first anti-slip grooves of the plurality of first anti-slip grooves formed at the same side of the first adapter portion are arranged at intervals. A plurality of second anti-slip grooves are provided at two sides of the second adapter portion in the width direction of the second adapter portion. In a length direction of the second adapter portion, second anti-slip grooves of the plurality of second anti-slip grooves formed at the same side of the second adapter portion are arranged at intervals.

In some embodiments of the present disclosure, the first anti-slip grooves formed at the same side of the first adapter portion are distributed on two ends of the first adapter portion in the length direction of the first adapter portion. The first anti-slip grooves are symmetrically arranged with respect to a middle axis of the first adapter portion extending in the length direction of the first adapter portion. The second anti-slip grooves formed at the same side of the second adapter portion are distributed on two ends of the second adapter portion in the length direction of the second adapter portion. The second anti-slip grooves are symmetrically arranged with respect to a middle axis of the second adapter portion extending in the length direction of the second adapter portion.

In some embodiments of the present disclosure, the end cover assembly further includes a first thermal insulator and a second thermal insulator. The first thermal insulator includes a first lateral thermal insulation member stacked on and connected to an inner lateral surface of the first adapter portion. In a length direction of the end cover assembly, a projection of the first anti-slip groove is at least partially located within a coverage of the first lateral thermal insulation member. The second thermal insulator includes a second lateral thermal insulation member stacked on and connected to an inner lateral surface of the second adapter portion. In the length direction of the end cover assembly, a projection of the second anti-slip groove is at least partially located within a coverage of the second lateral thermal insulation member.

In some embodiments of the present disclosure, in the width direction of the first adapter portion, a groove depth of the first anti-slip groove is greater than or equal to 0.05 mm and less than or equal to 3 mm. In the width direction of the second adapter portion, a groove depth of the second anti-slip groove is greater than or equal to 0.05 mm and less than or equal to 3 mm.

In some embodiments of the present disclosure, the end cover assembly further includes a first pole serving as a positive pole and passing through the first perforation of the first connection portion and a second pole serving as a negative pole and passing through the second perforation of the second connection portion. The first pole has lower electrical conductivity than the second pole. Further, the first pole has a greater diameter than the second pole.

In a second aspect, embodiments of the present disclosure provide an energy storage device. The energy storage device includes a housing, an electrode assembly mounted in the housing, and the end cover assembly as described above. The end cover assembly is mounted at an opening of the housing. The first pin and the second pin are respectively located at two sides of the electrode assembly in a length direction of the electrode assembly and are electrically connected to the electrode assembly.

In a third aspect, embodiments of the present disclosure provide a power consumption apparatus. The power consumption apparatus includes the energy storage device as described above. The energy storage device is configured to supply power to the power consumption apparatus.

In the related art, a pin of an existing end cover assembly includes a positive pin connected to a positive tab and a negative pin connected to a negative tab. Further, each of the positive pin and the negative pin is required to be mounted at the lower plastic part. During the process of mounting the positive pin and the negative pin at the lower plastic part, the problem of the reverse assembly of the positive pin and the negative pin is prone to occur.

In the embodiments of the present disclosure, the first positioning hole is formed at the first pin of the end cover assembly, and a first lower plastic part is correspondingly provided with a first positioning post. When the first pin is mounted at the first lower plastic part, the first positioning post of the first lower plastic part is inserted into the first positioning hole of the first pin to limit positions of the first pin and the first lower plastic part, thereby fixing the first pin and the first lower plastic part. The second positioning hole is formed at the second pin, and a second lower plastic part is correspondingly provided with a second positioning post. When the second pin is mounted at the second lower plastic part, the second positioning post of the second lower plastic part is inserted into the second positioning hole of the second pin to limit positions of the second pin and the second lower plastic part, thereby fixing the second pin and the second lower plastic part. Further, in the embodiments of the present disclosure, a first distance from the central axis of the first positioning hole to a side edge of the first connection portion in a width direction of the first connection portion is set to be different from a second distance from the central axis of the second positioning hole to a side edge of the second connection portion in a width direction of the second connection portion. In this way, the occurrence of a problem of reverse assembly of the first pin and the second pin when being assembled with the lower plastic part can be avoided, which improves a positioning and fool-proofing effect of assembly of the first pin and the second pin with the lower plastic part. In addition, a first interval between the central axis of the first positioning hole and the first bent portion is set to be different from a second interval between the central axis of the second positioning hole and the second bent portion, which further avoids the occurrence of the problem of the reverse assembly of the first pin and the second pin when being assembled with the lower plastic part. As a result, a positioning and fool-proofing effect of the assembly of the first pin and the second pin is further improved.

### BRIEF DESCRIPTION OF THE DRAWINGS

FIG. 1 is a schematic view of an application scene of an energy storage device according to an embodiment of the present disclosure.
FIG. 2 is a schematic structural view of the energy storage device shown in FIG. 1.
FIG. 3 is a schematic exploded view of a partial structure of the energy storage device shown in FIG. 2.
FIG. 4 is a schematic exploded view of an end cover assembly of the energy storage device shown in FIG. 3.
FIG. 5 is a schematic structural view of a first pin of the end cover assembly shown in FIG. 4.
FIG. 6 is another schematic structural view of the first pin as shown in FIG. 5.
FIG. 7 is a schematic structural view of a second pin of the end cover assembly shown in FIG. 4.
FIG. 8 is another schematic structural view of the second pin shown in FIG. 7.
FIG. 9 is another schematic structural view of a first lower plastic part of the end cover assembly shown in FIG. 4.
FIG. 10 is another schematic structural view of a second lower plastic part of the end cover assembly shown in FIG. 4.
FIG. 11 is a top view of a partial structure of the end cover assembly shown in FIG. 4.
FIG. 12 is a schematic view of a partial structure of the end cover assembly shown in FIG. 11.

Reference numerals in the accompanying drawings
energy storage device 1000, housing 200, opening 201, receiving cavity 202, end cover assembly 100, end cover 10, upper surface 11, lower surface 12, first through hole 13, second through hole 14, first lower plastic part 20, first body 21, first top surface 211, first bottom surface 212, first protrusion 22, first protrusion surface 221, first assembly groove 23, first bottom wall surface 231, first side wall surface 232, first surface 232a, second surface 232b, third surface 232c, fourth surface 232d, first pole through hole 24, first positioning post 25, second lower plastic part 30, second body 31, second top surface 311, second bottom surface 312, second protrusion 32, second protrusion surface 321, second assembly groove 33, second bottom wall surface 331, second side wall surface 332, fifth surface 332a, sixth surface 332b, seventh surface 332c, eighth surface 332d, second pole through hole 34, second positioning post 35, first pin 40, first connection portion 41, first outer surface 411, first inner surface 412, first perforation 413, first positioning hole 414, first connection side surface 415, second connection side surface 416, first adapter portion 42, first outer lateral surface 421, first inner lateral surface 422, first side surface 425, first anti-slip groove 45, first wall surface 451, first groove surface 452, first bent portion 43, first outer arc surface 431, first inner arc surface 432, second pin 50, second connection portion 51, second outer surface 511, second inner surface 512, second perforation 513, second positioning hole 514, third connection side surface 515, fourth connection side surface 516, second adapter portion 52, second outer lateral surface 521, second inner lateral surface 522, second side surface 525, second anti-slip groove 55, second wall surface 551, second groove surface 552, second bent portion 53, second outer arc surface 531, second inner arc surface 532, first pole 60, second pole 70, first thermal insulator 80, first lateral thermal insulation member 81, first end thermal insulation member 82, second thermal insulator 90, second lateral thermal insulation member 91, second end thermal insulation member 92, electrode assembly 300, electrode assembly body 310, first tab 320, second tab 330, energy storage system 5000, first electric energy conversion device 4100, second electric energy conversion device 4200, first power consumption apparatus 3000, second power consumption apparatus 2000, first spacing D1, second spacing D2, first distance L1, second distance L2, first interval S1, second interval S2.

### DETAILED DESCRIPTION

Technical solutions according to embodiments of the present disclosure will be described below in combination with accompanying drawings of the embodiments of the present disclosure. Obviously, the embodiments described below are only a part, rather than all, of the embodiments of the present disclosure. On the basis of the embodiments in the present disclosure, all other embodiments obtained by those of ordinary skill in the art without creative labor shall fall within the scope of the present disclosure.

In the present disclosure, unless otherwise clearly specified and limited, terms such as "install", "connect", "connect to", "fix", and the like should be understood in a broad sense. For example, it may be a fixed connection or a detachable connection or connection as one piece; mechanical connection or electrical connection, or capable of communicating with each other; direct connection or indirect connection through an intermediate; internal communication of two components or the interaction relationship between two components. For those skilled in the art, the specific meaning of the above-mentioned terms in the present disclosure should be understood according to specific circumstances.

It may be noted that the terms "first" and "second" are only used for descriptive purposes, and cannot be understood as indicating or implying relative importance or implicitly indicating the number of indicated technical features. Therefore, the features associated with "first" and "second" may explicitly or implicitly include at least one of the features.

Since energy demands for users have strong temporal and spatial properties. In order for rational utilization of energy and an improvement in a utilization rate of energy, it is necessary to employ a medium or device to store energy of one form or of another form converted from one form and then release the stored energy in a specific form of energy based on the demands of forthcoming applications. It is common knowledge that, in order to achieve the ambitious goal of carbon neutrality, a principal pathway for generating green electric energy currently is to develop green electric energy such as photovoltaic energy, wind power, and the like to replace fossil energy. Currently, the generation of green electric energy is often dependent on photovoltaic energy, wind power, potential energy of water, and the like. However, wind energy and solar energy generally pose challenges due to their intermittent nature and great fluctuating nature, which would result in grid instability, with insufficient electricity during peak demand and electricity excess during off-peak periods. In addition, unstable voltage may also cause damage to the power system. Therefore, insufficient electricity demand or inadequate grid capacity may lead to the problem of "Forced Abandonment of Wind and Light". To address these challenges, energy storage is crucial, i.e., the electric energy is stored by converting the electric energy into other forms of energy through physical or chemical means and released when needed by converting it back into the electric energy. In a nutshell, energy storage can be likened to a large-scale "power bank" that stores the electric energy during times when photovoltaics and wind power are abundant, and releases the stored electricity when needed.

By taking electrochemical energy storage as an example, embodiments of the present disclosure provide an energy storage device internally provided with a chemical battery group that mainly utilize chemical elements within the chemical battery group as an energy storage medium, accompanied by chemical reactions or transformations of the storage medium during charging and discharging of the batteries. In simple terms, electric energy generated by wind energy and solar energy is stored in the chemical battery. In a case where the use of external electric energy reaches a peak, the stored electric energy is released for use or is transferred to a place where the electric quantity is scarce for use.

Currently, energy storage (i.e., energy storage) finds extensive applications in various scenes, including (wind-solar) power-generation-side energy storage, grid-side energy storage, base station-side energy storage, and user-side energy storage. The corresponding energy storage device includes types as described below.

The energy storage device may include a large-scale energy storage container applied in a grid-side energy storage scene. The container, serving as high-quality active and reactive power regulation sources in the power grid, realizes load matching of electric energy in time and space, enhances renewable energy absorption and consumption capability, and is of great significance in aspects like standby of a power grid system, alleviation of peak-load power supply pressure, and peak regulation and frequency modulation.

The energy storage device may include small and medium-sized energy-saving electric cabinets applied in user-side industrial and commercial energy storage scenes (banks, shopping malls, and the like), with a main operating mode being "peak shaving and valley filling". Since there is a significant price difference in electricity charges during off-peak periods of power consumption demands, customers having energy storage devices typically charge the energy storage cabinet/box during low-price periods of the electricity charges to reduce costs. Then, during high-price periods of the electricity charges, they draw on the electricity stored in the energy storage device to save on electricity expenses.

It may be noted that the above devices containing energy storage devices, such as an energy storage container, small and medium-sized energy-saving electric cabinets, and a household small energy storage box, can be understood as power consumption apparatuses.

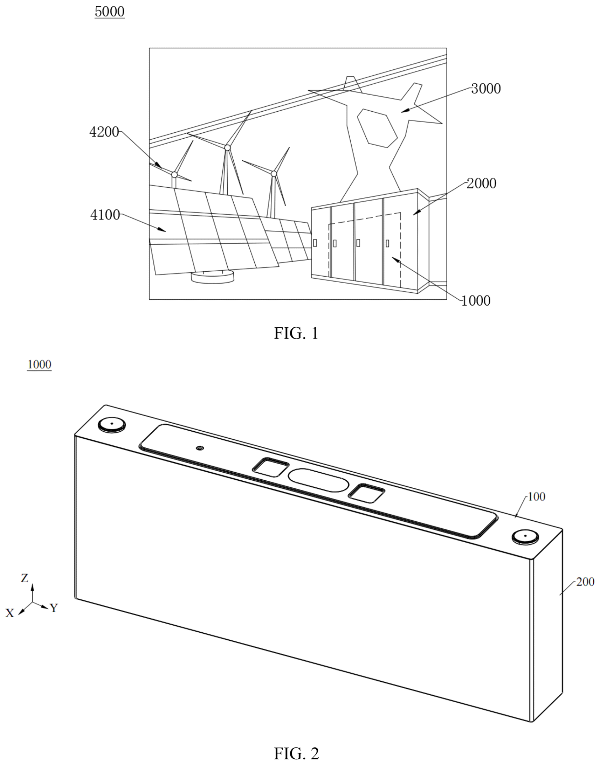

FIG. 1 is a schematic view of an application scene of an energy storage device according to an embodiment of the present disclosure.

The energy storage device 1000 according to the embodiments of the present disclosure is applied in an energy storage system 5000. The energy storage system 5000 includes a first electric energy conversion device 4100 (photovoltaic panel), a second electric energy conversion device 4200 (fan), a first power consumption apparatus 3000 (power grid), a second power consumption apparatus 2000 (base station), and the energy storage device 1000. The energy storage system 5000 further includes an energy storage cabinet. The energy storage device 1000 is mounted in the energy storage cabinet, and the energy storage cabinet may be mounted outdoors. In some embodiments, the first electric energy conversion device 4100 may convert the solar energy into the electric energy in the valley period of electricity charges. The energy storage device 1000 is used for storing the electric energy and supplying it to the first power consumption apparatus 3000 or the second power consumption apparatus 2000 in a case where the electricity price peak occurs or supplying power in the event of outages or blackouts of the first power consumption apparatus 3000 or the second power consumption apparatus 2000. The second electric energy conversion device 4200 may convert wind energy into the electric energy in the valley period of electricity charges. The energy storage device 1000 is used for storing the electric energy and supplying it to the first power consumption apparatus 3000 or the second power consumption apparatus 2000 in a case where the electricity price peak occurs or supplying power in the event of outages or blackouts of the first power consumption apparatus 3000 or the second power consumption apparatus 2000. Transmission of the electric energy may be performed using a high-voltage cable.

It may be noted that the above devices containing the energy storage device 1000, such as the first power consumption apparatus 3000 and the second power consumption apparatus 2000, may be understood as power consumption apparatuses. The energy storage device 1000 supplies power to the power consumption apparatuses.

A plurality of energy storage devices 1000 may be provided. The plurality of energy storage devices 1000 may be connected in series or parallel with each other. In this embodiment, "plurality of" refers to two or more.

It may be understood that the energy storage devices 100 may include, but are not limited to, a single battery, a battery module, a battery pack, a battery system, and the like. Actual application forms of the energy storage devices 1000 according to the embodiment of the present disclosure may include, but are not limited to, the listed products. The energy storage devices 1000 may also be in other application forms. For example, the energy storage device 1000 may be a secondary battery such as a nickel-hydrogen battery, a nickel-cadmium battery, a lead-acid (or lead storage) battery, a lithium-ion battery, or a polymer lithium-ion battery. When the energy storage device 1000 is the single battery, it may be of a cylindrical shape, a square shape, or other shapes. In this embodiment, the energy storage device 1000 is the square battery, which is a secondary battery.

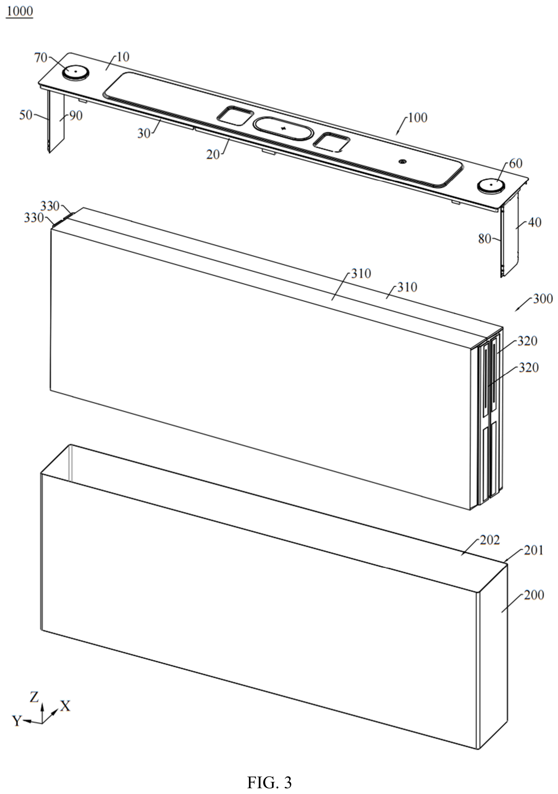

Referring to FIG. 2 and FIG. 3, FIG. 2 is a schematic structural view of the energy storage device shown in FIG. 1, and FIG. 3 is an exploded schematic view of a partial structure of the energy storage device shown in FIG. 2.

For ease of description, a width direction of the energy storage device 1000 is defined as an X-axis direction, a length direction of the energy storage device 1000 is defined as a Y-axis direction, and a height direction of the energy storage device 1000 is defined as a Z-axis direction. Two of the X-axis direction, the Y-axis direction, and the Z-axis direction are perpendicular to each other.

The directional terms such as "up", "down", "bottom", "right", and "left" mentioned in the description of the embodiments of the present disclosure are defined based on the orientations shown in FIG. 2 of the specification drawings, and shall not constitute a limitation on the energy storage device 1000 in actual application scenes. In some embodiments, a positive direction in the Z-axis is defined as a top of the energy storage device 1000, and a negative direction in the Z-axis direction is defined as a bottom of the energy storage device 1000. In addition, terms such as "same", "equal", or "parallel" used hereinafter are permitted to have a certain tolerance.

As shown in FIG. 2 and FIG. 3, the energy storage device 1000 includes a housing 200, an end cover assembly 100, and an electrode assembly 300. The housing 200 has an opening 201 and is provided with a receiving cavity 202 in communication with the opening 201. The electrode assembly 300 is received in the receiving cavity 202. The end cover assembly 100 is mounted at an end of the electrode assembly 300 in a height direction of the electrode assembly 300 (in the Z-axis direction) and covers the opening 201, to isolate an internal environment of the energy storage device 1000 from an external environment of the energy storage device 1000.

As shown in FIG. 3, in this embodiment, the electrode assembly 300 includes an electrode assembly body 310 and a tab. The electrode assembly body 310 has a first side surface and a second side surface. The first side surface and the second side surface are opposite to each other in a length direction of the electrode assembly body 310 (i.e., the Y-axis direction). The electrode assembly body 310 further has a top surface connected to the first side surface and the second side surface and facing towards the opening 201 of the housing 200. In this embodiment, two electrode assembly bodies 310 are provided and connected in parallel in the Y-axis direction.

The tab includes a first tab 320 and a second tab 330. Each of the first tab 320 and the second tab 330 is electrically connected to the electrode assembly body 310. The first tab 320 is led out from the first side surface of the electrode assembly body 310, and the second tab 330 is led out from the second side surface of the electrode assembly body 310. In this embodiment, two first tabs 320 and two second tab 330 are provided. The first tab 320 may serve as a positive tab, and the second tab 330 may serve as a negative tab. In some embodiments, the first tab 320 may serve as a negative tab, and the second tab 330 may serve as a positive tab. When the end cover assembly 100 is not assembled with the electrode assembly 300, the two first tabs 320 extend away from the electrode assembly body 310 in the Y-axis direction, and are opposite to and spaced apart from each other in the X-axis direction. The two second tabs 330 extend away from the electrode assembly body 310 in the Y-axis direction, and are opposite to and spaced apart from each other in the X-axis direction. When the end cover assembly 100 is assembled with the electrode assembly 300, the two first tabs 320 are bent relative to each other in the X-axis direction, and the two second tabs 330 are bent relative to each other in the X-axis direction.

It may be noted that a structure of the electrode assembly 300 according to the embodiments of the present disclosure may not be limited to the structure shown in FIG. 3, and may also be other forms that may satisfy assembly with the end cover assembly 100. The present disclosure is not limited in this regard.

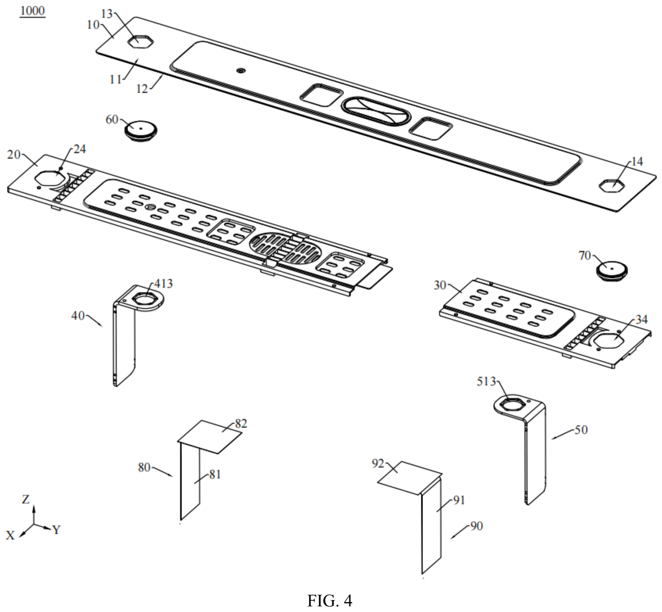

Referring to FIG. 3 and FIG. 4, FIG. 4 is a schematic exploded view of an end cover assembly of the energy storage device shown in FIG. 3.

In this embodiment, the end cover assembly 100 includes an end cover 10, athe, a first pin 40, a second pin 50, a first pole 60, a second pole 70, a first thermal insulator 80, and a second thermal insulator 90. The lower plastic part and the end cover 10 are stacked in a height direction of the end cover assembly 100 (i.e., the Z-axis direction). A length of the lower plastic part is the same as or substantially the same as a length of the end cover 10. A width of the lower plastic part is the same as or substantially the same as a width of the end cover 10. The first pole 60 and the second pole 70 are located at two opposite ends of the end cover assembly 100 in a length direction of the end cover assembly 100, respectively. The first pole 60 extends through the end cover 10 and the lower plastic part, and is connected to the first pin 40. The second pole 70 extends through the end cover 10 and the lower plastic part, and is connected to the second pin 50. As shown in FIG. 3, the first pin 40 and the second pin 50 are located at two opposite ends of the electrode assembly 300 in a length direction of the electrode assembly 300 (i.e., the Y-axis direction), respectively. A part of the first pin 40 is mounted at a side of the lower plastic part away from the end cover 10, and another part of the first pin 40 is stacked on and connected to the first tab 320. The first tab 320 is electrically connected to the first pole 60 through the first pin 40. A part of the second pin 50 is mounted at the side of the lower plastic part away from the end cover 10, and another part of the second pin 50 is stacked on and connected to the second tab 330. The second tab 330 is electrically connected to the second pole 70 through the second pin 50. The first thermal insulator 80 is disposed between the first pin 40 and the electrode assembly body 310, and is stacked on and covers a surface of the first pin 40 facing towards the electrode assembly body 310 and a part of a surface of the lower plastic part. A surface of the first thermal insulator 80 connected to the first pin 40 is adhesive. The first thermal insulator 80 is configured to block heat conduction between the first pin 40 and the electrode assembly 300. The second thermal insulator 90 is disposed between the second pin 50 and the electrode assembly body 310, and is stacked on and covers a surface of the second pin 50 facing towards the electrode assembly body 310 and a part of the surface of the lower plastic part. A surface of the second thermal insulator 90 connected to the second pin 50 is adhesive. The second thermal insulator 90 is configured to block heat conduction between the second pin 50 and the electrode assembly 300.

In this embodiment, the end cover 10 is a plain aluminum component. The lower plastic part is made of an insulating material such as plastic. The first thermal insulator 80 and the second thermal insulator 90 may be, but are not limited to, high-temperature adhesive tapes, which have characteristics of being smooth, not prone to shifting, resistant to high temperatures, small in volume, not reacting with an electrolyte, and blocking heat transfer. The above high-temperature adhesive tape may be made of, but is not limited to, heat-insulating and non-peeling materials such as a polyimide adhesive tape, a Teflon adhesive tape, or a Teflon coating. The first pole 60 is a positive pole, and the second pole 70 is a negative pole. In some embodiments, the first pole 60 may be a negative pole, and the second pole 70 may be a positive pole.

The end cover 10 has an upper surface 11 and a lower surface 12. The upper surface 11 and the lower surface 12 are opposite to each other in a thickness direction of the end cover 10 (i.e., the Z-axis direction). The end cover 10 further has a first through hole 13 and a second through hole 14 each extending through the upper surface 11 and the lower surface 12. The first through hole 13 and the second through hole 14 are located at two opposite ends of the end cover 10 in a length direction of the end cover 10 (i.e., the Y-axis direction), respectively. The first through hole 13 is configured to allow the first pole 60 to pass through the first through hole 13, and the second through hole 14 is configured to allow the second pole 70 to pass through the second through hole 14. In this embodiment, the end cover 10 is substantially an elongated thin plate, and each of the first through hole 13 and the second through hole 14 is substantially a hexagonal hole. In some embodiments, the first through hole 13 and/or the second through hole 14 may also be, but are not limited to, circular holes, elliptical holes, rectangular holes, or the like.

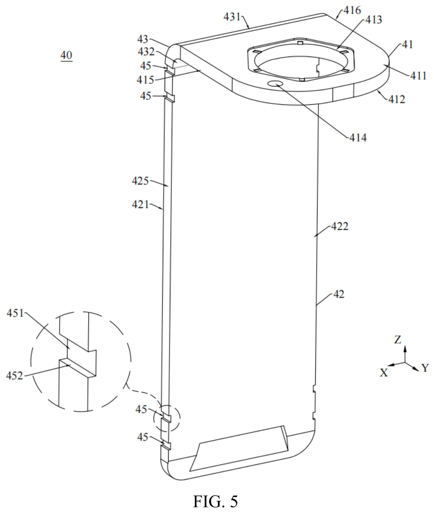

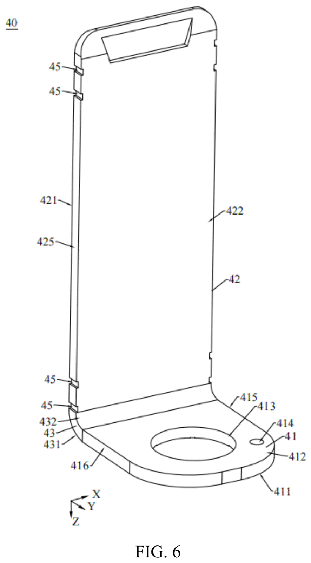

Referring to FIG. 4, FIG. 5, and FIG. 6, FIG. 5 is a schematic structural view of a first pin of the end cover assembly shown in FIG. 4, and FIG. 6 is another schematic structural view of the first pin as shown in FIG. 5.

In this embodiment, the first pin 40 is a metal sheet body. The first pin 40 includes a first connection portion 41, a first adapter portion 42, and a first bent portion 43. The first bent portion 43 is connected between the first connection portion 41 and the first adapter portion 42. An extending direction of the first connection portion 41 is angled with an extending direction of the first adapter portion 42. The first connection portion 41 is configured to be connected to the lower plastic part, and to be fixedly and electrically connected to the first pole 60 through welding. The first adapter portion 42 is configured to be fixedly and electrically connected to the first tab 320 through welding. That is, the first pin 40 is configured to transfer a current of the electrode assembly 300 to the first pole 60 sequentially through the first adapter portion 42, the first bent portion 43, and the first connection portion 41. It may be understood that the first pin 40 is substantially of an L-shaped bent structure. The first connection portion 41 and the first adapter portion 42 are located at different planes.

In some embodiments, the first connection portion 41 has a first outer surface 411 and a first inner surface 412. The first outer surface 411 and the first inner surface 412 are opposite to each other in a thickness direction of the first connection portion 41 (i.e., the Z-axis direction). The first inner surface 412 is configured to be connected to the first thermal insulator 80. The first connection portion 41 has a first connection side surface 415 and a second connection side surface 416. The first connection side surface 415 and the second connection side surface 416 are opposite to each other in a width direction of the first connection portion 41 (i.e., the X-axis direction). Both the first outer surface 411 and the first inner surface 412 are connected with each of the first connection side surface 415 and the second connection side surface 416.

The first connection portion 41 further includes a first perforation 413 extending through the first outer surface 411 and the first inner surface 412. The first perforation 413 is used for the first pole 60 to pass through. In this embodiment. A shape of the first connection portion 41 matches a shape of the first assembly groove 23. The first perforation 413 is substantially a circular hole.

The first connection portion 41 further includes a first positioning hole 414 extending through the first outer surface 411 and the first inner surface 412. The first positioning hole 414 is spaced apart from the first perforation 413, and is used for cooperating with the lower plastic part to position the first pin 40 with respect to the lower plastic part. In this embodiment, the first positioning hole 414 is substantially a circular hole, and one first positioning hole is provided. The first positioning hole 414 is located closer to the first connection side surface 415 than the second connection side surface 416. Moreover, the first positioning hole 414 is located between a periphery of the first perforation 413 and the first connection side surface 415, and is spaced apart from the first perforation 413 and the first connection side surface 415. In the Y-axis direction, the first positioning hole 414 is located at a side of the first perforation 413 away from the first bent portion 43. That is, the first positioning hole 414 is located at an end of the first connection portion 41 away from the first bent portion 43. In other embodiments, a plurality of first positioning holes 414 may be provided. The plurality of first positioning holes 414 are each formed at the periphery of the first perforation 413 and spaced apart from the first perforation 413.

In this embodiment, the first adapter portion 42 is a rectangular sheet body. The first adapter portion 42 is substantially of a rectangular shape, and a length direction of the first adapter portion 42 is the same as or substantially the same as the Z-axis direction. The first adapter portion 42 has a first outer lateral surface 421 and a first inner lateral surface 422. The first outer lateral surface 421 and the first inner lateral surface 422 are opposite to each other in a thickness direction of the first adapter portion 42 (i.e., the Y-axis direction). The first outer lateral surface 421 is connected to the first outer surface 411 of the first connection portion 41, and the first inner lateral surface 422 is connected to the first inner surface 412 of the first connection portion 41. The first adapter portion 42 further has two first side surfaces 425 opposite to each other in a width direction of the first adapter portion 42 (i.e., the X-axis direction). The two first side surfaces 425 are connected with each of the first outer lateral surface 421 and the first inner lateral surface 422.

The first adapter portion 42 further includes a first anti-slip groove 45 recessed towards the inside of the first adapter portion 42 from the first side surface 425 of the first adapter portion 42. The first anti-slip groove 45 extends through the first outer lateral surface 421 and the first inner lateral surface 422. The first anti-slip groove 45 has three groove openings that are respectively located at the first side surface 425, the first outer lateral surface 421, and the first inner lateral surface 422. The first anti-slip groove 45 has a first wall surface 451 and two first groove surfaces 452. The first wall surface 451 is opposite to the groove opening at the first side surface 425. Each of the two first groove surfaces 452 is connected to and angled with the first wall surface 451, the first outer lateral surface 421, the first inner lateral surface 422, and the first side surface 425.

In this embodiment, the first anti-slip groove 45 is substantially an opened through-groove of a rectangular shape. A plurality of first anti-slip grooves 45 is provided. The plurality of first anti-slip grooves 45 are distributed on the two first side surfaces 425 of the first adapter portion 42, and the number of first anti-slip grooves 45 disposed at the two first side surfaces 425 is the same. The plurality of first anti-slip grooves 45 disposed at one of the first side surfaces 425 of the first adapter portion 42 are arranged at intervals in the length direction of the first adapter portion 42. The plurality of first anti-slip grooves 45 disposed at the first side surface 425 of the first adapter portion 42 are located at two opposite ends of the first adapter portion 42 in the length direction of the first adapter portion 42. Exemplarily, eight first anti-slip grooves 45 are provided. Four of the eight first anti-slip grooves 45 are located at a side of the first adapter portion 42 in the width direction of the first adapter portion 42, and are respectively located at two opposite ends of the first side surface 425 in a length direction of the first side surface 425. The other four first anti-slip grooves 45 are located at another side of the first adapter portion 42 in the width direction of the first adapter portion 42, and are respectively located at the two opposite ends of the first side surface 425 in the length direction of the first side surface 425. In an implementation, the plurality of first anti-slip grooves 45 are symmetrically arranged with respect to a middle axis P1 of the first adapter portion 42 extending in the length direction of the first adapter portion 42. In this way, tress stability when being in contact with the first thermal insulator 80 is ensured.

In this embodiment, the first bent portion 43 is substantially an arc-shaped plate body, and has a first outer arc surface 431 and a first inner arc surface 432. The first outer arc surface 431 and the first inner arc surface 432 are opposite to each other in a thickness direction of the first bent portion 43. The first outer arc surface 431 is connected to the first outer surface 411 and the first outer lateral surface 421. The first inner arc surface 432 is connected to the first inner surface 412 and the first inner lateral surface 422.

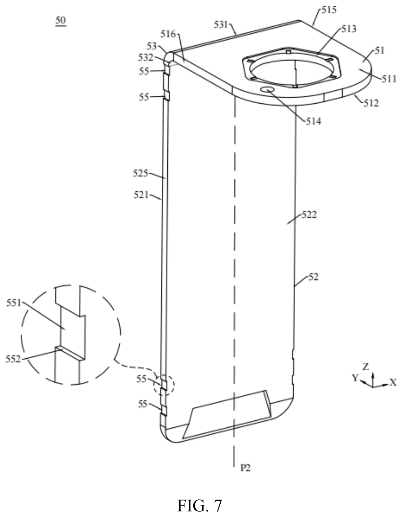

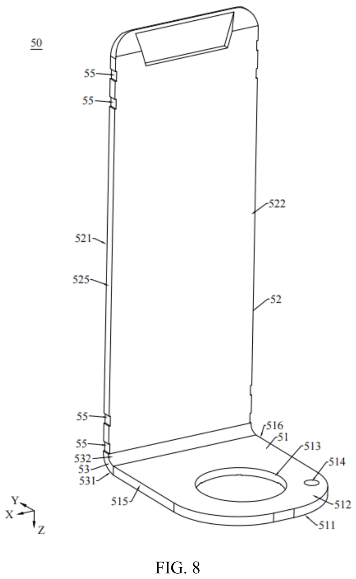

Referring to FIG. 4, FIG. 7, and FIG. 8, FIG. 7 is a schematic structural view of a second pin of the end cover assembly shown in FIG. 4, and FIG. 8 is another schematic structural view of the second pin shown in FIG. 7.

In this embodiment, a structure of the second pin 50 is similar to a structure of the first pin 40. The second pin 50 is a metal sheet body, and includes a second connection portion 51, a second adapter portion 52, and a second bent portion 53. The second bent portion 53 is connected to the second connection portion 51 and the second adapter portion 52. An extending direction of the second connection portion 51 is angled with an extending direction of the second adapter portion 52. The second connection portion 51 is configured to be connected to the lower plastic part, and to be fixedly and electrically connected to the second pole 70 through welding. The second adapter portion 52 is configured to be fixedly and electrically connected to the second tab 330 through welding. That is, the second pin 50 is configured to transfer the current of the electrode assembly 300 to the second pole 70 sequentially through the second adapter portion 52, the second bent portion 53, and the second connection portion 51. It may be understood that the second pin 50 is substantially of an L-shaped bent structure. The second connection portion 51 and the second adapter portion 52 are located at different planes.

In some embodiments, the second connection portion 51 has a second outer surface 511 and a second inner surface 512. The second outer surface 511 and the second inner surface 512 are opposite to each other in a thickness direction of the second connection portion 51 (i.e., the Z-axis direction). The second inner surface 512 is configured to be connected to the second thermal insulator 90. The second connection portion 51 has a third connection side surface 515 and a fourth connection side surface 516. The third connection side surface 515 and the fourth connection side surface 516 are opposite to each other in a width direction of the second connection portion 51 (i.e., the X-axis direction). The second outer surface 511 and the second inner surface 512 are connected with each of the third connection side surface 515 and the fourth connection side surface 516.

The second connection portion 51 further includes a second perforation 513 extending through the second outer surface 511 and the second inner surface 512. The second perforation 513 is configured to allow the second pole 70 to pass through the second perforation 513. In this embodiment, a shape of the second connection portion 51 matches a shape of the second assembly groove 33. The second perforation 513 is substantially a circular hole.

The second connection portion 51 further includes a second positioning hole 514 extending through the second outer surface 511 and the second inner surface 512. The second positioning hole 514 is used for cooperating with the lower plastic part to position the second pin 50 with respect to the lower plastic part. In this embodiment, the second positioning hole 514 is substantially a circular hole, and one second positioning holes 514 is provided. The second positioning hole 514 is located closer to the fourth connection side surface 516 than the third connection side surface 515. Moreover, the second positioning hole 514 is located between a periphery of the second perforation 513 and the fourth connection side surface 516, and spaced apart from the second perforation 513 and the fourth connection side surface 516. In the Y-axis direction, the second positioning hole 514 is located at a side of the second perforation 513 away from the second bent portion 53. That is, the second positioning hole 514 is disposed at an end of the second connection portion 51 away from the second bent portion 53. In other embodiments, a plurality of second positioning holes 514 may be provided. The plurality of second positioning holes 514 are each disposed at the periphery of the second perforation 513, and spaced apart from the second perforation 513.

In this embodiment, the second adapter portion 52 is a rectangular sheet body. The second adapter portion 52 is substantially of a rectangular shape. A length direction of the second adapter portion 52 is consistent with or substantially the same as the Z-axis direction. The second adapter portion 52 has a second outer lateral surface 521 and a second inner lateral surface 522. The second outer lateral surface 521 and the second inner lateral surface 522 are opposite to each other in a thickness direction of the second adapter portion 52 (i.e., the Y-axis direction). The second outer lateral surface 521 is connected to the second outer surface 511 of the second connection portion 51. The second inner lateral surface 522 is connected to the second inner surface 512 of the second connection portion 51. The second adapter portion 52 further has two second side surfaces 525 opposite to each other in a width direction of the second adapter portion 52 (i.e., the X-axis direction). Each of the two second side surfaces 525 is connected to the second outer lateral surface 521 and the second inner lateral surface 522.

The second adapter portion 52 further includes a second anti-slip groove 55 recessed towards the inside of the second adapter portion 52 from the second side surface 525 of the second adapter portion 52. The second anti-slip groove 55 extends through the second outer lateral surface 521 and the second inner lateral surface 522. It may be understood that the second anti-slip groove 55 has three groove openings respectively located at the second side surface 525, the second outer lateral surface 521, and the second inner lateral surface 522. The second anti-slip groove 55 has a second wall surface 551 and two second groove surfaces 552. The second wall surface 551 is opposite to the groove opening located at the second side surface 525. Each of the two second groove surfaces 552 is connected to and angled with the second wall surface 551, the second outer lateral surface 521, the second inner lateral surface 522, and the second side surface 525.

In this embodiment, the second anti-slip groove 55 is substantially an open through groove in a rectangular shape. A plurality of second anti-slip grooves 55 is provided. The plurality of second anti-slip grooves 55 are distributed on the two second side surfaces 525 of the second adapter portion 52. Moreover, the number of second anti-slip grooves 55 disposed at the two second side surfaces 525 is the same. The plurality of second anti-slip grooves 55 formed at one of the second side surfaces 525 of the second adapter portion 52 are arranged at intervals in the length direction of the second adapter portion 52. The plurality of second anti-slip grooves 55 disposed at the same second side surface 525 of the second adapter portion 52 are located at two opposite ends of the second adapter portion 52 in the length direction of the second adapter portion 52. Exemplarily, eight second anti-slip grooves 55 are provided. Four of the eight second anti-slip grooves 55 are located at a side of the second adapter portion 52 in the width direction of the second adapter portion 52, and are respectively located at two opposite ends of the second side surface 525 in a length direction of the second side surface 525. The other four second anti-slip grooves 55 are located at another side of the second adapter portion 52 in the width direction of the second adapter portion 52, and are respectively located at the two opposite ends of the second side surface 525 in the length direction of the second side surface 525. In an implementation, the plurality of second anti-slip grooves 55 are symmetrically arranged with respect to a middle axis P2 of the second adapter portion 52 extending in the length direction of the second adapter portion 52. In this way, stress stability when being in contact with the second thermal insulator 90 is ensured.

In this embodiment, the second bent portion 53 is substantially an arc-shaped plate body, and has a second outer arc surface 531 and a second inner arc surface 532. The second outer arc surface 531 and the second inner arc surface 532 are opposite to each other in the thickness direction of the second bent portion 53. The second outer arc surface 531 is connected to the second outer surface 511 and the second outer lateral surface 521. The second inner arc surface 532 is connected to the second inner surface 512 and the second inner lateral surface 522.

In this embodiment, each of a depth of the first anti-slip groove 45 and a depth of the second anti-slip groove 55 is greater than or equal to 0.05 mm and less than or equal to 3 mm, to prevent the depth of the first anti-slip groove 45 and the depth of the second anti-slip groove 55 from being too small, which easily generates metal wires during the formation of the first anti-slip groove 45 and the second anti-slip groove 55. Subsequently, these wires easily disintegrate to become metal debris that falls into the battery, thereby avoiding affecting battery performance. This range design also prevents the first anti-slip groove 45 and second anti-slip groove 55 from being excessively deep, thereby affecting a current-carrying capacity. Meanwhile, it is also possible to prevent heat accumulation from causing noticeable heating, resulting in a reduction in energy efficiency of the battery.

Please continue to refer to FIG. 4.

In this embodiment, the lower plastic part includes a first lower plastic part 20 and a second lower plastic part 30 that are separately formed. In other embodiments, the first lower plastic part 20 and the second lower plastic part 30 may be integrally formed. A length of the first lower plastic part 20 is greater than a length of the second lower plastic part 30. A width of the first lower plastic part 20 is equal to a width of the second lower plastic part 30. A total length of the first lower plastic part 20 and the second lower plastic part 30 is equal to a length of the lower plastic part.

Structures of the first lower plastic part 20 and the second lower plastic part 30 are described in detail below.

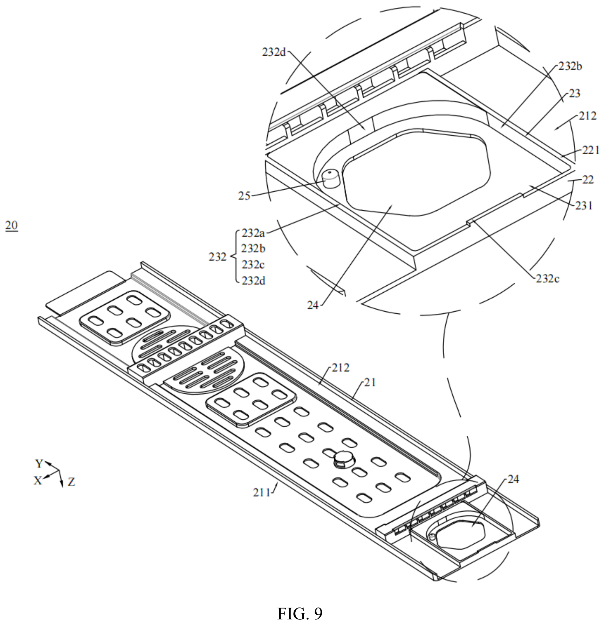

Referring to FIG. 4 and FIG. 9, FIG. 9 is another schematic structural view of a first lower plastic part of the end cover assembly shown in FIG. 4.

In this embodiment, the first lower plastic part 20 is an elongated thin plate, and includes a first body 21. The first body 21 has a first top surface 211 and a first bottom surface 212 opposite to the first top surface 211 in a thickness direction of the first body 21 (i.e., the Z-axis direction).

The first lower plastic part 20 further includes a first protrusion 22 protruding from the first bottom surface 212 of the first body 21 and located at an end of the first lower plastic part 20 in a length direction of the first lower plastic part 20 (i.e., the Y-axis direction). The first protrusion 22 has a first protrusion surface 221 away from the first body 21 and has the same orientation as the first bottom surface 212. In this embodiment, the first protrusion 22 is substantially a rectangular protrusion. A width of the first protrusion 22 is less than a width of the first body 21. A length of the first protrusion 22 is less than a length of the first body 21.

The first lower plastic part 20 further includes a first assembly groove 23 recessed towards the inside of the first body 21 from the first protrusion surface 221 of the first protrusion 22. The first assembly groove 23 is configured to receive the first connection portion 41 of the first pin 40, and its depth is the same as or substantially the same as a depth of the first connection portion 41. A shape of the first assembly groove 23 matches a shape of the first connection portion 41. The first assembly groove 23 has a first bottom wall surface 231 and a first side wall surface 232. An orientation of the first bottom wall surface 231 is the same as an orientation of the first bottom surface 212. The first side wall surface 232 surrounds a periphery of the first bottom wall surface 231 and is connected to the first bottom wall surface 231. The first side wall surface 232 is angled with the first bottom wall surface 231.

The first side wall surface 232 has a first surface 232a, a second surface 232b, a third surface 232c, and a fourth surface 232d. In a circumferential direction of the first assembly groove 23, the first surface 232a, the third surface 232c, the second surface 232b, and the fourth surface 232d are connected sequentially. The first surface 232a and the second surface 232b are opposite to each other and spaced apart from each other in a width direction of the first assembly groove 23. The third surface 232c and the fourth surface 232d are opposite to each other and spaced apart from each other in a length direction of the first assembly groove 23. In this embodiment, the first surface 232a, the second surface 232b, and the third surface 232c are each flat surfaces, and the fourth surface 232d is an arc surface.

The first lower plastic part 20 further includes a first pole through hole 24 extending through the first bottom wall surface 231 of the first assembly groove 23 and the first top surface 211 of the first body 21. The first pole through hole 24 is configured to allow the first pole 60 to pass through the first pole through hole 24. In this embodiment, the first pole through hole 24 is a hexagonal hole. In some embodiments, the first pole through hole 24 may also be, but is not limited to, a circular hole, an elliptical hole, a rectangular hole, or the like.

The first lower plastic part 20 further includes a first positioning post 25 protruding from the first bottom wall surface 231 of the first assembly groove 23. In the length direction of the first lower plastic part 20, the first positioning post 25 is farther away from an end of the first lower plastic part 20 than the first pole through hole 24. The first positioning post 25 is configured to pass through the first positioning hole 414 of the first pin 40. In this embodiment, the first positioning post 25 is of a cylindrical shape, and one first positioning posts 25 is provided. The first positioning post 25 is located closer to the first surface 232a than the second surface 232b, and closer to the fourth surface 232d than the third surface 232c. The first positioning post 25 is located between a periphery of the first pole through hole 24 and the first surface 232a, and spaced apart from the first pole through hole 24 and the first surface 232a. In some embodiments, a plurality of first positioning posts 25 may be provided. The present disclosure is not limited in this regard.

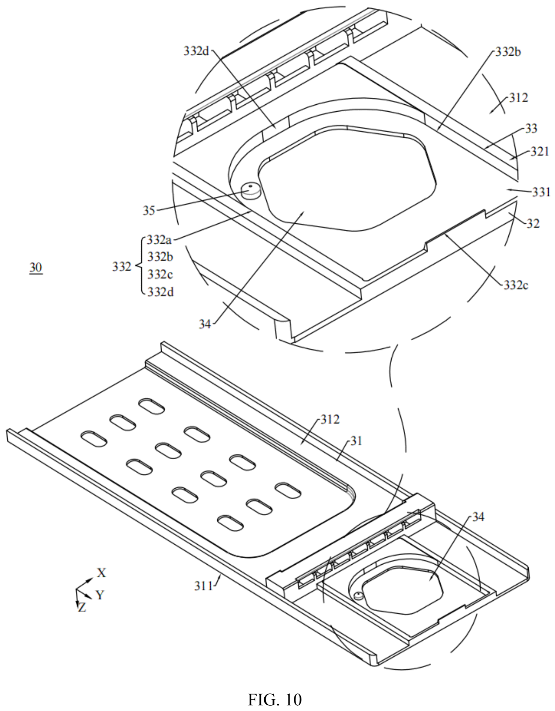

Referring to FIG. 4 and FIG. 10, FIG. 10 is another schematic structural view of a second lower plastic part of the end cover assembly shown in FIG. 4.

In this embodiment, the structure of the second lower plastic part 30 is similar to the structure of the first lower plastic part 20. The second lower plastic part 30 is an elongated thin plate, and includes a second body 31. The second body 31 has a second top surface 311 and a second bottom surface 312 opposite to the second top surface 311 in a thickness direction of the second body 31 (i.e., the Z-axis direction).

The second lower plastic part 30 further includes a second protrusion 32 protruding from the second bottom surface 312 of the second body 31 and located at an end of the second lower plastic part 30 in a length direction of the second lower plastic part 30 (i.e., the Y-axis direction). The second protrusion 32 has a second protrusion surface 321 away from the second body 31 and has the same orientation as the second bottom surface 312. In this embodiment, the second protrusion 32 is substantially a rectangular protrusion. A width of the second protrusion 32 is less than a width of the second body 31. A length of the second protrusion 32 is less than a length of the second body 31.

The second lower plastic part 30 further includes a second assembly groove 33 recessed towards the inside of the second body 31 from the second protrusion surface 321 of the second protrusion 32. The second assembly groove 33 is configured to receive the second connection portion 51 of the second pin 50, and its depth is the same as or substantially the same as a depth of the second connection portion 51. The shape of the second assembly groove 33 matches the shape of the second connection portion 51. The second assembly groove 33 has a second bottom wall surface 331 and a second side wall surface 332. An orientation of the second bottom wall surface 331 is the same as an orientation of the second bottom surface 312. The second side wall surface 332 surrounds a periphery of the second bottom wall surface 331 and is connected to the second bottom wall surface 331. The second side wall surface 332 is angled with the second bottom wall surface 331.

The second side wall surface 332 has a fifth surface 332a, a sixth surface 332b, a seventh surface 332c, and an eighth surface 332d. In a circumferential direction of the second assembly groove 33, the fifth surface 332a, the seventh surface 332c, the sixth surface 332b, and the eighth surface 332d are connected sequentially. The fifth surface 332a and the sixth surface 332b are opposite to each other and spaced apart from each other in a width direction of the second assembly groove 33. The seventh surface 332c and the eighth surface 332d are opposite to each other and spaced apart from each other in a length direction of the second assembly groove 33. In this embodiment, the fifth surface 332a, the sixth surface 332b, and the seventh surface 332c are each flat surfaces, and the eighth surface 332d is an arc surface.

The second lower plastic part 30 further includes a second pole through hole 34 extending through the second bottom wall surface 331 of the second assembly groove 33 and the second top surface 311 of the second body 31. The second pole through hole 34 is configured to allow the second pole 70 to pass through the second pole through hole 34. In this embodiment, the second pole through hole 34 is a hexagonal hole. In some embodiments, the second pole through hole 34 may also be, but is not limited to, a circular hole, an elliptical hole, a rectangular hole, or the like.

The second lower plastic part 30 further includes a second positioning post 35 protruding from the second bottom wall surface 331 of the second assembly groove 33. In the length direction of the second lower plastic part 30, the second positioning post 35 is farther away from an end portion of the second lower plastic part 30 than the second pole through hole 34 is. The second positioning post 35 is configured to pass through the second positioning hole 514 of the second pin 50. In this embodiment, the second positioning post 35 is of a cylindrical shape, and one second positioning posts 35 is provided. The second positioning post 35 is located closer to the fifth surface 332a than the sixth surface 332b and closer to the eighth surface 332d than the seventh surface 332c. The second positioning post 35 is located between the second pole through hole 34 and the fifth surface 332a, and spaced apart from the second pole through hole 34 and the fifth surface 332a. In some embodiments, a plurality of second positioning posts 35 may be provided. The present disclosure is not limited in this regard.

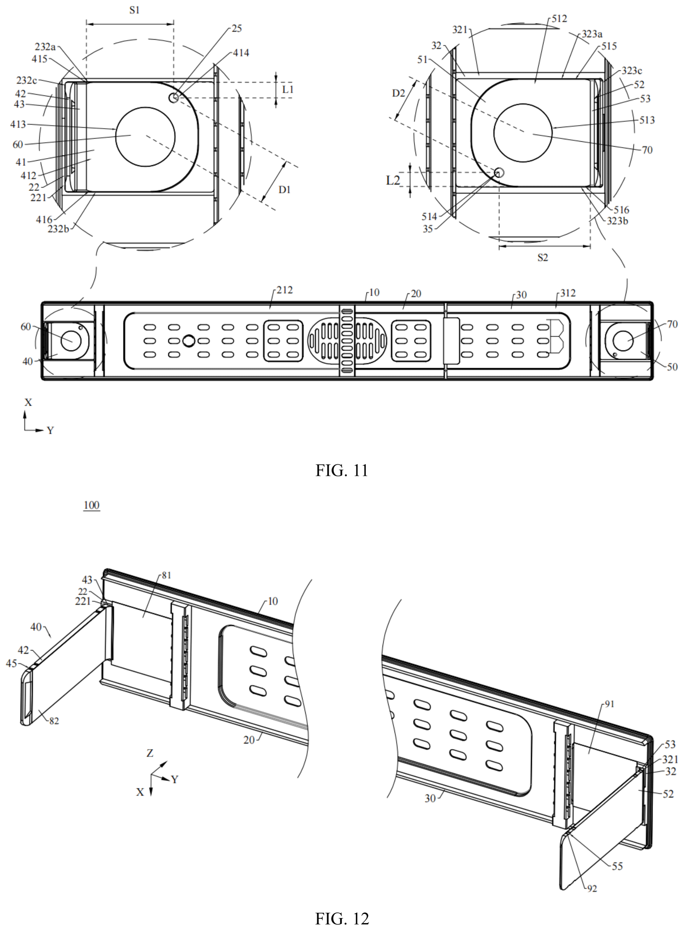

Referring to FIG. 4 and FIG. 11, FIG. 11 is a top view of a partial structure of the end cover assembly shown in FIG. 4.

In this embodiment, the first lower plastic part 20 and the second lower plastic part 30 are mounted together at the end cover 10. The total length of the first lower plastic part 20 and the second lower plastic part 30 is less than or equal to the length of the end cover 10, and the width of the first lower plastic part 20 and the width of the second lower plastic part 30 are less than or equal to the width of the end cover 10. In some embodiments, in the Y-axis direction, the first lower plastic part 20 is located at an end of the second lower plastic part 30 away from the second protrusion 32. An end of the first lower plastic part 20 away from the first protrusion 22 is connected to the end of the second lower plastic part 30 away from the second protrusion 32. An orientation of the first bottom surface 212 of the first lower plastic part 20 and an orientation of the second bottom surface 312 of the second lower plastic part 30 are the same, and together form a bottom surface of the lower plastic part. An orientation of the first top surface 211 of the first lower plastic part 20 and an orientation of the second top surface 311 of the second lower plastic part 30 are the same, and together form a top surface of the lower plastic part. The top surface of the lower plastic part is connected to the lower surface 12 of the end cover 10. The first pole through hole 24 of the first lower plastic part 20 is coaxially arranged and in communication with the first through hole 13 of the end cover 10. The second pole through hole 34 of the second lower plastic part 30 is coaxially arranged and in communication with the second through hole 14 of the end cover 10.

In this embodiment, the first positioning post 25 and the second positioning post 35 are respectively arranged at two sides of the lower plastic part in a width direction of the lower plastic part, and are respectively located adjacent to two ends of the lower plastic part in a length direction of the lower plastic part.

The first pin 40 is mounted at a side of the first lower plastic part 20 away from the end cover 10. The first connection portion 41 of the first pin 40 is received in the first assembly groove 23 of the first lower plastic part 20. The first outer surface 411 of the first connection portion 41 is connected to the first bottom wall surface 231 of the first assembly groove 23. The first connection side surface 415 of the first connection portion 41 faces towards the first surface 232a, and the second connection side surface 416 of the first connection portion 41 faces towards the second surface 232b. The first positioning post 25 of the first lower plastic part 20 passes through the first positioning hole 414 of the first connection portion 41, to facilitate position limiting and fixation of the first pin 40 on the first lower plastic part 20. The first perforation 413 of the first connection portion 41 is coaxially arranged and in communication with the first pole through hole 24 of the first lower plastic part 20. The first bent portion 43 is bent away from the first lower plastic part 20. The first adapter portion 42 extends away from the first lower plastic part 20. In the Y-axis direction, each of the first bent portion 43 and the first adapter portion 42 is located adjacent to the third surface 232c.

The first pole 60 passes through the first through hole 13 of the end cover 10, the first pole through hole 24 of the first lower plastic part 20, and the first perforation 413 of the first pin 40 sequentially. The first pole 60 is insulated from the end cover 10 by an insulation member to prevent a short circuit from occurring between the first pole 60 and the end cover 10. Moreover, the first pole 60 is sealed to the end cover 10 and the first lower plastic part 20 by a sealing member to prevent the electrolyte inside the energy storage device 1000 from flowing out of the energy storage device 1000 through gaps among the first lower plastic part 20, the end cover 10, and the first pole 60, thus ensuring safety of the end cover assembly 100. A peripheral side of the first pole 60 abuts with a hole wall of the first perforation 413. The first pole 60 is fixed to the first connection portion 41 through laser welding, achieving electrical conduction between the first pole 60 and the first pin 40.

The second pin 50 is mounted at a side of the second lower plastic part 30 away from the end cover 10. The second connection portion 51 of the second pin 50 is received in the second assembly groove 33 of the second lower plastic part 30. The second outer surface 511 of the second connection portion 51 is connected to the second bottom wall surface 331 of the second assembly groove 33. The third connection side surface 515 of the second connection portion 51 faces towards the fifth surface 332a. The fourth connection side surface 516 of the second connection portion 51 faces towards the sixth surface 332b. The second positioning post 35 of the second lower plastic part 30 passes through the second positioning hole 514 of the second connection portion 51, to facilitate position limiting and fixation of the second pin 50 on the second lower plastic part 30. The second perforation 513 of the second connection portion 51 is coaxially arranged and in communication with the second pole through hole 34 of the second lower plastic part 30. The first bent portion 43 is bent away from the first lower plastic part 20. The second adapter portion 52 extends away from the second lower plastic part 30. Moreover, the second inner lateral surface 522 of the second adapter portion 52 and the first inner lateral surface 422 of the first adapter portion 42 are opposite to each other and spaced apart from each other in the Y-axis direction. In the Y-axis direction, each of the second bent portion 53 and the second connection portion 51 is located adjacent to the seventh surface 332c.

The second pole 70 passes through the second through hole 14 of the end cover 10, the second pole through hole 34 of the second lower plastic part 30, and the second perforation 513 of the second pin 50 sequentially. The second pole 70 is insulated from the end cover 10 by the insulation member to prevent a short circuit from occurring between the second pole 70 and the end cover 10. Moreover, the second pole 70 is sealed to the end cover 10 and the second lower plastic part 30 by the sealing member to prevent the electrolyte inside the energy storage device 1000 from flowing out of the energy storage device 1000 through gaps among the second lower plastic part 30, the end cover 10, and the second pole 70, thus ensuring the safety of the end cover assembly 100. A peripheral side of the second pole 70 abuts with a hole wall of the second perforation 513. The second pole 70 is fixed to the second connection portion 51 through laser welding, achieving electrical conduction between the second pole 70 and the second pin 50.

As shown in FIG. 11, an orientation of the first connection side surface 415 of the first connection portion 41 is the same as an orientation of the third connection side surface 515 of the second connection portion 51, and an orientation of the second connection side surface 416 of the first connection portion 41 is the same as an orientation of the fourth connection side surface 516 of the second connection portion 51.

A vertical distance from a central axis of the first positioning hole 414 to a central axis of the first perforation 413 is defined as a first spacing D1, and a vertical distance from a central axis of the second positioning hole 514 to a central axis of the second perforation 513 is defined as a second spacing D2. In this embodiment, the first spacing D1 is unequal to the second spacing D2, to achieve a positioning and fool-proofing effect during assembly of the first pin 40 and the second pin 50 with the lower plastic part, avoiding the occurrence of a problem of reverse assembly of the first pin 40 and the second pin 50 when being assembled with the lower plastic part.

A vertical distance from a central axis of the first positioning hole 414 to the first connection side surface 415 is defined as a first distance L1, and a vertical distance from a central axis of the second positioning hole 514 to the third connection side surface 515 is defined as a second distance L2. The first distance L1 is unequal to the second distance L2. Meanwhile, in the Y-axis direction, a vertical distance from the central axis of the first positioning hole 414 to the first bent portion 43 is defined as a first interval S1, and a vertical distance from the central axis of the second positioning hole 514 to the second bent portion 53 is defined as a second interval S2. The first interval S1 is unequal to the second interval S2. In this way, the occurrence of the problem of the reverse assembly of the first pin 40 and the second pin 50 when being assembled with the lower plastic part is further avoided. As a result, the positioning and fool-proofing effect of the assembly of the first pin 40 and the second pin 50 with the lower plastic part is further improved.

In addition, in the Y-axis direction, the first positioning hole 414 is spaced apart from the first perforation 413 and is located at the side of the first perforation 413 away from the first bent portion 43. A current between the first pole 60 and the first tab 320 does not pass through the first positioning hole 414, which avoids current accumulation at the first positioning hole 414, thereby reducing an impact of the first positioning hole 414 on current carrying of the first pin 40. As a result, energy loss of the first pin 40 during the current carrying is decreased.

Moreover, the second positioning hole 514 is spaced apart from the second perforation 513 and is located at the side of the second perforation 513 away from the second bent portion 53. A current between the second pole 70 and the second tab 330 does not pass through the second positioning hole 514, which avoids current accumulation at the second positioning hole 514, thereby reduce an impact of the second positioning hole 514 on current carrying of the second pin 50. As a result, energy loss of the second pin 50 during the current carrying is decreased. Further, energy efficiency of the energy storage device 1000 is improved.

In this embodiment, in a case where current carrying of the first pin 40 and the first pole 60 as well as current carrying of the second pin 50 and the second pole 70 are satisfied, the first pole 60 may be made of, but not limited to, an aluminum material. Moreover, the second pole 70 may be made of, but not limited to, a copper material. The first pole 60 has lower electrical conductivity than the second pole 70. Moreover, a volume of the first pole 60 is different from a volume of the second pole 70, and is greater than the volume of the second pole 70. The first pole 60 has a greater diameter than the second pole 70. This design saves a manufacturing material of the second pole 70 to some extent, and reduces redundancy of the second pole 70. In addition, corresponding to sizes of the first pole 60 and the second pole 70, the first perforation 413 has a greater diameter than the second perforation 513, which further achieves a positioning and fool-proofing effect on respectively assembly of the first pole 60 and the second pole 70 with the first pin 40 and the second pin 50.

Referring to FIG. 4, FIG. 11, and FIG. 12, FIG. 12 is a schematic view of a partial structure of the end cover assembly shown in FIG. 11.

As shown in FIG. 4 and FIG. 12, the first thermal insulator 80 covers a side of the first pin 40 away from the first lower plastic part 20. The first thermal insulator 80 includes a first lateral thermal insulation member 81 and a first end thermal insulation member 82. The first lateral thermal insulation member 81 and the first end thermal insulation member 82 are separately formed. In this embodiment, the first lateral thermal insulation member 81 is connected to the first end thermal insulation member 82, and an extending direction of the first lateral thermal insulation member 81 is angled with an extending direction of the first end thermal insulation member 82. The first lateral thermal insulation member 81 covers the first inner lateral surface 422 of the first adapter portion 42, the first inner arc surface 432 of the first bent portion 43, and the first inner surface 412 of the first connection portion 41, and is configured to separate the first adapter portion 42 and the first bent portion 43 from the electrode assembly body 310. The first end thermal insulation member 82 covers the first inner surface 412 of the first connection portion 41, and is configured to separate the first connection portion 41 from the electrode assembly body 310.

It may be understood that the first end thermal insulation member 82 and the first lateral thermal insulation member 81 partially overlap to form an overlapping region. The overlapping region is located in the first connection portion 41. The overlapping region may be regarded as a thickened region of the first thermal insulator 80, which increases adhesion reliability between the first thermal insulator 80 and the first pin 40 while better blocking heat conduction from the first pin 40 towards the electrode assembly body 310.

In some embodiments, the first lateral thermal insulation member 81 and the first end thermal insulation member 82 are spaced apart from each other, i.e., the first thermal insulator 80 is an intermittent film layer as a whole. The first lateral thermal insulation member 81 is located on the first adapter portion 42, and the first end thermal insulation member 82 located on the first connection portion 41.

In this embodiment, in the Z-axis direction, the first end thermal insulation member 82 completely covers the first assembly groove 23, i.e., the first end thermal insulation member 82 completely covers the first connection portion 41 and the first pole 60. The first end thermal insulation member 82 is configured to separate the first connection portion 41 and the first pole 60 from the electrode assembly body 310. That is, in the Z-axis direction, each of projections of the first connection portion 41 and the first pole 60 is entirely located within a projection of the first end thermal insulation member 82.

In the Y-axis direction, the first lateral thermal insulation member 81 covers the first inner lateral surface 422 of the first adapter portion 42, and a projection of the first anti-slip groove 45 of the first adapter portion 42 is at least partially located within a projection of the first lateral thermal insulation member 81. That is, the first lateral thermal insulation member 81 may cover a part of a groove opening of the first anti-slip groove 45 formed at the first inner lateral surface 422, or completely cover the groove opening of the first anti-slip groove 45 formed at the first inner lateral surface 422. Moreover, projections of at least part of the plurality of first anti-slip grooves 45 are located within the projection of the first lateral thermal insulation member 81. After the first lateral thermal insulation member 81 is bonded to the first adapter portion 42, and the first tab 320 covers the first adapter portion 42, a part of the first lateral thermal insulation member 81 overlapping with the first anti-slip groove 45 may be bent into the first anti-slip groove 45. When the first lateral thermal insulation member 81 is poorly bonded to the first adapter portion 42, the first anti-slip groove 45 may serve as a force application point to facilitate tearing off the first lateral thermal insulation member 81 or even the entire first thermal insulator 80 for rework.

As shown in FIG. 4 and FIG. 12, the second thermal insulator 90 covers a side of the second pin 50 away from the second lower plastic part 30. The second thermal insulator 90 includes a second lateral thermal insulation member 91 and a second end thermal insulation member 92. The second lateral thermal insulation member 91 and the second end thermal insulation member 92 are separately formed. In this embodiment, the second lateral thermal insulation member 91 is connected to the second end thermal insulation member 92, and an extending direction of the second lateral thermal insulation member 91 is angled with an extending direction of the second end thermal insulation member 92. The second lateral thermal insulation member 91 covers the second inner lateral surface 522 of the second adapter portion 52, the second inner arc surface 532 of the second bent portion 53, and the second inner surface 512 of the second connection portion 51, and is configured to separate the second adapter portion 52 and the second bent portion 53 from the electrode assembly body 310. The second end thermal insulation member 92 covers the second inner surface 512 of the second connection portion 51, and is configured to separate the second connection portion 51 from the electrode assembly body 310.

It may be understood that the second end thermal insulation member 92 and the second lateral thermal insulation member 91 partially overlap to form an overlapping region. The overlapping region is located in the second connection portion 51. The overlapping region may be regarded as a thickened region of the second thermal insulator 90, which increases adhesion reliability between the second thermal insulator 90 and the second pin 50 while better blocking heat conduction from the second pin 50 towards the electrode assembly body 310.

In some embodiments, the second lateral thermal insulation member 91 and the second end thermal insulation member 92 are spaced apart from each other, i.e., the second thermal insulator 90 is an intermittent film layer as a whole. The second lateral thermal insulation member 91 is located on the second adapter portion 52, and the second end thermal insulation member 92 is located on the second connection portion 51.

In this embodiment, in the Z-axis direction, the second end thermal insulation member 92 completely covers the second assembly groove 33, i.e., the second end thermal insulation member 92 completely covers the second connection portion 51 and the second pole 70. The second end thermal insulation member 92 is configured to separate the second connection portion 51 and the second pole 70 from the electrode assembly body 310. That is, in the Z-axis direction, each of projections of the second connection portion 51 and the second pole 70 is completely located within a projection of the second end thermal insulation member 92.

In the Y-axis direction, the second lateral thermal insulation member 91 covers the second inner lateral surface 522 of the second adapter portion 52, and a projection of the second anti-slip groove 55 of the second adapter portion 52 is at least partially located within a projection of the second lateral thermal insulation member 91. That is, the second lateral thermal insulation member 91 may cover a part of a groove opening of the second anti-slip groove 55 formed at the second inner lateral surface 522, or may completely cover the groove opening of the second anti-slip groove 55 formed at the second inner lateral surface 522. Moreover, projections of at least part of the plurality of second anti-slip grooves 55 are located within the projection of the second lateral thermal insulation member 91. After the second lateral thermal insulation member 91 is bonded to the second adapter portion 52, and the second tab 330 covers the second adapter portion 52, a part of the second lateral thermal insulation member 91 overlapping with the second anti-slip groove 55 may be bent into the second anti-slip groove 55. When the second lateral thermal insulation member 91 is poorly bonded to the second adapter portion 52, the second anti-slip groove 55 may serve as a force application point to facilitate tearing off the second lateral thermal insulation member 91 or even the entire second thermal insulator 90 for rework.

As shown in FIG. 3, the end cover assembly 100 is mounted at the electrode assembly 300. The bottom surface of the lower plastic part faces towards a top surface of the electrode assembly body 310. The first pin 40 and the second pin 50 are located at two opposite sides of the electrode assembly body 310, respectively. The first pin 40 is inserted between the two first tabs 320 and the first side surface of the electrode assembly body 310. The two first tabs 320 are bent opposite to each other, and connected to the first pin 40 through welding. The first lateral thermal insulation member 81 and the first end thermal insulation member 82 are located between the first pin 40, a part of the first lower plastic part 20, and the electrode assembly body 310, preventing a short circuit caused by contact between the first pin 40 and the electrode assembly body 310. A large amount of heat is generated when the first adapter portion 42 and the two first tabs 320 are connected through welding. The first adapter portion 42 is separated from the electrode assembly body 310 by the first lateral thermal insulation member 81, to effectively block heat transfer between the first adapter portion 42 and the electrode assembly body 310, ensuring performance of the electrode assembly body 310.

The second pin 50 is inserted between the two second tabs 330 and the second side surface of the electrode assembly body 310. The two second tabs 330 are bent opposite to each other, and connected to the second pin 50 through welding. The second lateral thermal insulation member 91 and the second end thermal insulation member 92 are located between the second pin 50, a part of the second lower plastic part 30, and the electrode assembly body 310, preventing a short circuit caused by contact between the second pin 50 and the electrode assembly body 310. A large amount of heat is generated when the second adapter portion 52 and the two second tabs 330 are connected through welding. The second adapter portion 52 is separated from the electrode assembly body 310 by the second lateral thermal insulation member 91, to effectively block heat transfer between the second adapter portion 52 and the electrode assembly body 310, ensuring the performance of the electrode assembly body 310.

In some embodiments, the two first tabs 320 are respectively led out from the first side surfaces of the two electrode assembly bodies 310, and are opposite to each other and spaced apart from each other in the X-axis direction. The two first tabs 320 extend in the Y-axis direction to a side of the first adapter portion 42 away from the electrode assembly body 310, are bent opposite to each other in the X-axis direction, and cover the first adapter portion 42. Each of the two first tabs 320 is welded to the first outer lateral surface 421 of the first adapter portion 42 to achieve electrical conduction between the two first tabs 320 and the first pin 40.

The first anti-slip groove 45 is formed at the first side surface 425 of the first adapter portion 42. When the first tabs 320 extend along and is bent to the side of the first adapter portion 42 away from the electrode assembly body 310, the first tabs 320 may cause the first lateral thermal insulation member 81 to bend and adhere to an edge of the first anti-slip grooves 45, which separates the first tabs 320 from the first anti-slip groove 45 to some extent and prevents the first anti-slip groove 45 from scratching the first tabs 320. The first anti-slip groove 45 may increase a friction between the first tabs 320 and the first adapter portion 42 to some extent, reducing sliding of the first tabs 320 in the length direction of the first adapter portion 42. In this way, a problem of inaccurate welding positioning between the first tabs 320 and the first adapter portion 42 caused by the sliding of the first tabs 320 with respect to the first adapter portion 42 is avoided, improving a welding yield rate of the first tabs 320 and the first adapter portion 42. Meanwhile, connection stability between the first tabs 320 and the first pin 40 after the end cover assembly 100 and the electrode assembly 300 are mounted together in the housing 200 is improved, preventing the first pin 40 from tearing the first tabs 320. In this embodiment, a projection of the first anti-slip groove 45 in the length direction of the energy storage device 1000 is at least partially located within a coverage of the first tabs 320.

In addition, the plurality of first anti-slip grooves 45 are uniformly arranged at two ends of the first side surfaces 425 of the first adapter portion 42 in the length direction of the first adapter portion 42. When the two first tabs 320 are bent opposite to each other and cover the first adapter portion 42, a region in contact with the first tabs 320 is located at two sides of a connection region between the first tabs 320 and the first pin 40. Even if the first anti-slip grooves 45 cause slight damage to a film material of the first tabs 320, current conduction between the first tabs 320 and the first pin 40 will not be affected. Moreover, in the length direction of the energy storage device 1000, the projections of the at least part of the plurality of first anti-slip grooves 45 are located within the coverage of the first tabs 320.

The first bent portion 43 corresponds to an edge of the electrode assembly body 310. The edge is an intersection point between the top surface and the first side surface of the electrode assembly body 310. The first bent portion 43 is separated from the electrode assembly body 310 by the first lateral thermal insulation member 81 to block heat conduction between the first bent portion 43 and the electrode assembly body 310.

The first inner surface 412 of the first connection portion 41 faces towards the top surface of the electrode assembly body 310, and the first connection portion 41 is separated from the electrode assembly body 310 by the first end thermal insulation member 82. The first end thermal insulation member 82 may block heat conduction between the first connection portion 41 and the electrode assembly body 310, protecting the performance of the electrode assembly body 310. In addition, a part of the first lower plastic part 20 is separated from the electrode assembly body 310 by the first end thermal insulation member 82. The first end thermal insulation member 82 may also block heat conduction between a part of the first lower plastic part 20 and the electrode assembly body 310, avoiding an impact of a high temperature on the electrode assembly 300.

The two second tabs 330 are respectively led out from the second side surfaces of the two electrode assembly bodies 310, and are opposite to each other and spaced apart from each other in the X-axis direction. The two second tabs 330 extend in the Y-axis direction to a side of the second adapter portion 52 away from the electrode assembly body 310, are bent opposite to each other in the X-axis direction, and cover the second adapter portion 52. Both the two second tabs 330 are welded to the second outer lateral surface 521 of the second adapter portion 52 to achieve electrical conduction between the two second tabs 330 and the second pin 50.

The second anti-slip groove 55 is formed at the second side surfaces 525 of the second adapter portion 52. When the second tabs 330 extend and is bent to the side of the second adapter portion 52 away from the electrode assembly body 310, the second tabs 330 may cause the second lateral thermal insulation member 91 to bend and adhere to an edge of the second anti-slip grooves 55, which separates the second tabs 330 from the second anti-slip grooves 55 to some extent and prevents the second anti-slip groove 55 from scratching the second tabs 330. The second anti-slip groove 55 may increase a friction between the second tabs 330 and the second adapter portion 52 to some extent, reducing sliding of the second tabs 330 in the length direction of the second adapter portion 52. In this way, a problem of inaccurate welding positioning between the second tabs 330 and the second adapter portion 52 caused by the sliding of the second tabs 330 with respect to the second adapter portion 52 is avoided, improving a welding yield rate of the second tabs 330 and the second adapter portion 52. Meanwhile, connection stability between the second tabs 330 and the second pin 50 after the end cover assembly 100 and the electrode assembly 300 are mounted together in the housing 200 is improved, preventing the second pin 50 from tearing the second tabs 330. In this embodiment, a projection of the second anti-slip grooves 55 in the length direction of the energy storage device 1000 at least partially is located within a coverage of the second tabs 330.

In addition, the plurality of second anti-slip grooves 55 are uniformly arranged at two ends of the second side surfaces 525 of the second adapter portion 52 in the length direction of the second adapter portion 52. When the two second tabs 330 are bent opposite to each other and cover the second adapter portion 52, a region in contact with the second tabs 330 is located at two sides of a connection region between the second tabs 330 and the second pin 50. Even if the second anti-slip grooves 55 cause slight damage to a film material of the second tabs 330, current conduction between the second tabs 330 and the second pin 50 will not be affected. Moreover, in the length direction of the energy storage device 1000, the projections of at least part of the plurality of second anti-slip grooves 55 are located within the coverage of the second tabs 330.

The second bent portion 53 corresponds to an edge of the electrode assembly body 310. The edge is an intersection point between the top surface and the second side surface of the electrode assembly body 310. The second bent portion 53 is separated from the electrode assembly body 310 by the second lateral thermal insulation member 91 to block heat conduction between the second bent portion 53 and the electrode assembly body 310.

The second inner surface 512 of the second connection portion 51 faces towards the top surface of the electrode assembly body 310, and the second connection portion 51 is separated from the electrode assembly body 310 by the second end thermal insulation member 92. The second end thermal insulation member 92 may block heat conduction between the second connection portion 51 and the electrode assembly body 310, protecting the performance of the electrode assembly body 310. In addition, a part of the second lower plastic part 30 is separated from the electrode assembly body 310 by the second end thermal insulation member 92. The second end thermal insulation member 92 may also block heat conduction between part of the second lower plastic part 30 and the electrode assembly body 310, avoiding the impact of a high temperature on the electrode assembly 300.

As shown in FIG. 2 and FIG. 3, both the end cover assembly 100 and the electrode assembly 300 are mounted in the housing 200. An edge of the end cover 10 is connected to an edge of the opening 201 of the housing 200 through welding, bonding or other manners to seal the energy storage device 1000.

In the related art, a pin of an existing end cover assembly includes a positive pin connected to a positive tab and a negative pin connected to a negative tab. Moreover, each of the positive pin and the negative pin is required to be mounted at the lower plastic part. During the process of mounting the positive pin and the negative pin at the lower plastic part, the problem of the reverse assembly of the positive pin and the negative pin is prone to occur.

In embodiments of the present disclosure, the first positioning hole 414 is formed at the first pin 40 of the end cover assembly 100, and a first lower plastic part 20 is correspondingly provided with a first positioning post 25. When the first pin 40 is mounted at the first lower plastic part 20, the first positioning post 25 of the first lower plastic part 20 is inserted into the first positioning hole 414 of the first pin 40 to limit positions of the first pin 40 and the first lower plastic part 20, thereby fixing the first pin 40 and the first lower plastic part 20. The second positioning hole 514 is formed at the second pin 50, and a second lower plastic part 30 is correspondingly provided with a second positioning post 35. When the second pin 50 is mounted at the second lower plastic part 30, the second positioning post 35 of the second lower plastic part 30 is inserted into the second positioning hole 514 of the second pin 50 to limit positions of the second pin 50 and the second lower plastic part 30, thereby fixing the second pin 50 and the second lower plastic part 30. In the embodiments of the present disclosure, a first distance L1 from the central axis of the first positioning hole 414 to a side edge of the first connection portion 41 in the width direction of the first connection portion 41 is set to be different from a second distance L2 from the central axis of the second positioning hole 514 to a side edge of the second connection portion 51 in the width direction of the second connection portion 51, to avoid the occurrence of a problem of reverse assembly of the first pin 40 and the second pin 50 when being assembled with the lower plastic part. As a result, the positioning and fool-proofing effect of assembly of the first pin 40 and the second pin 50 with the lower plastic part is improved. In addition, the first interval S1 between the central axis of the first positioning hole 414 and the first bent portion 43 is set to be different from the second interval S2 between the central axis of the second positioning hole 514 and the second bent portion 53, to further avoid the occurrence of the problem of the reverse assembly of the first pin 40 and the second pin 50 when being assembled with the lower plastic part. As a result, the positioning and fool-proofing effect of the assembly of the first pin 40 and the second pin 50 is further improved.

While part of embodiments and implementations of the present disclosure have been described above, the protect scope of the present disclosure is not limited to these embodiments and implementations. Various variants and alternatives within the technical scope disclosed by the present disclosure can be easily conceived by any of those skilled in the art without departing from the technical scope of the present disclosure. Therefore, these variants and alternatives are to be encompassed by the protect scope of present disclosure as defined by the claims as attached.

## Claims

1. An end cover assembly (100), comprising:
a lower plastic part comprising a body, wherein the body has a first assembly groove (23) and a second assembly groove (33) that are recessed from a side of the body in a thickness direction of the body, the first assembly groove (23) and the second assembly groove (33) being respectively located at two opposite ends of the lower plastic part in a length direction of the lower plastic part and being spaced apart from each other, wherein a bottom wall surface of the first assembly groove (23) is provided with a first positioning post (25) protruding from the bottom wall surface of the first assembly groove (23), and wherein a bottom wall surface of the second assembly groove (33) is provided with a second positioning post (35) protruding from the bottom wall surface of the second assembly groove (33);
a first pin (40) comprising a first connection portion (41) and a first bent portion (43), the first bent portion (43) being bent relative to and connected to the first connection portion (41), wherein the first connection portion (41) comprises a first positioning hole (414) extending through two surfaces of the first connection portion (41) in a thickness direction of the first connection portion (41), and wherein the first connection portion (41) has a first connection side surface (415) and a second connection side surface (416) opposite to the first connection side surface (415), the two surfaces of the first connection portion (41) in the thickness direction of the first connection portion (41) being connected with each of the first connection side surface (415) and the second connection side surface (416); and
a second pin (50) comprising a second connection portion (51) and a second bent portion (53), the second bent portion (53) being bent relative to and connected to the second connection portion (51), wherein the second connection portion (51) comprises a second positioning hole (514) extending through two surfaces of the second connection portion (51) in a thickness direction of the second connection portion (51), and wherein the second connection portion (51) has a third connection side surface (515) and a fourth connection side surface (516) opposite to the third connection side surface (515), the two surfaces of the second connection portion (51) in the thickness direction of the second connection portion (51) being connected with each of the third connection side surface (515) and the fourth connection side surface (516), wherein:
the first connection portion (41) is mounted in the first assembly groove (23), the first positioning post (25) passes through the first positioning hole (414), the second connection portion (51) is mounted in the second assembly groove (33), the second positioning post (35) passes through the second positioning hole (514), an orientation of the first connection side surface (415) of the first connection portion (41) is the same as an orientation of the third connection side surface (515) of the second connection portion (51), and each of the first bent portion (43) and the second bent portion (53) is bent away from the lower plastic part; and
a vertical distance from a central axis of the first positioning hole (414) to the first connection side surface (415) is defined as a first distance, and a vertical distance from a central axis of the second positioning hole (514) to the fourth connection side surface (516) is defined as a second distance, the first distance being unequal to the second distance; and/or in the length direction of the lower plastic part, a vertical distance from the central axis of the first positioning hole (414) to the first bent portion (43) is defined as a first interval, and a vertical distance from the central axis of the second positioning hole (514) to the second bent portion (53) is defined as a second interval, the first interval being unequal to the second interval.

2. The end cover assembly (100) according to claim 1, wherein:
the first positioning hole (414) is located closer to the first connection side surface (415) than the second connection side surface (416), and the second positioning hole (514) is located closer to the fourth connection side surface (516) than the third connection side surface (515); and
the first positioning post (25) and the second positioning post (35) are respectively arranged at two sides of the body in a width direction of the body, and are respectively located adjacent to the two ends of the lower plastic part in the length direction of the lower plastic part.

3. The end cover assembly (100) according to claim 1, wherein:
the first pin (40) further comprises a first adapter portion (42) connected to an end of the first bent portion (43) away from the first connection portion (41), the first adapter portion (42) being angled with the first connection portion (41), and the second pin (50) further comprises a second adapter portion (52) connected to an end of the second bent portion (53) away from the second connection portion (51), the second adapter portion (52) being angled with the second connection portion (51), each of the first adapter portion (42) and the second adapter portion (52) being configured to be electrically connected to an electrode assembly (300);
the first connection portion (41) further comprises a first perforation (413) extending through the two surfaces of the first connection portion (41) in the thickness direction of the first connection portion (41), the first perforation (413) and the first positioning hole (414) being spaced apart from each other, and the first positioning hole (414) being located on a side of the first perforation (413) away from the first adapter portion (42); and
the second connection portion (51) further comprises a second perforation (513) extending through the two surfaces of the second connection portion (51) in the thickness direction of the second connection portion (51), the second perforation (513) and the second positioning hole (514) being spaced apart from each other, and the second positioning hole (514) being located on a side of the second perforation (513) away from the second adapter portion (52).

4. The end cover assembly (100) according to claim 3, wherein a vertical distance from the central axis of the first positioning hole (414) to a central axis of the first perforation (413) is defined as a first spacing, and a vertical distance from the central axis of the second positioning hole (514) to a central axis of the second perforation (513) is defined as a second spacing, the first spacing being unequal to the second spacing.

5. The end cover assembly (100) according to claim 3, wherein:
the first adapter portion (42) comprises a first anti-slip groove (45) recessed towards the inside of the first adapter portion (42) from a surface of the first adapter portion (42) in a width direction of the first adapter portion (42), the first anti-slip groove (45) extending through two surfaces of the first adapter portion (42) in a thickness direction of the first adapter portion (42); and
the second adapter portion (52) comprises a second anti-slip groove (55) recessed towards the inside of the second adapter portion (52) from a surface of the second adapter portion (52) in a width direction of the second adapter portion (52), the second anti-slip groove (55) extending through two surfaces of the second adapter portion (52) in a thickness direction of the second adapter portion (52).

6. The end cover assembly (100) according to claim 5, wherein:
a plurality of first anti-slip grooves (45) are provided at two sides of the first adapter portion (42) in the width direction of the first adapter portion (42), wherein in a length direction of the first adapter portion (42), first anti-slip grooves (45) of the plurality of first anti-slip grooves (45) formed at the same side of the first adapter portion (42) are arranged at intervals; and
a plurality of second anti-slip grooves (55) are provided at two sides of the second adapter portion (52) in the width direction of the second adapter portion (52), wherein in a length direction of the second adapter portion (52), second anti-slip grooves (55) of the plurality of second anti-slip grooves (55) formed at the same side of the second adapter portion (52) are arranged at intervals.

7. The end cover assembly (100) according to claim 6, wherein:
the first anti-slip grooves (45) formed at the same side of the first adapter portion (42) are distributed on two ends of the first adapter portion (42) in the length direction of the first adapter portion (42), wherein the first anti-slip grooves (45) are symmetrically arranged with respect to a middle axis of the first adapter portion (42) extending in the length direction of the first adapter portion (42); and
the second anti-slip grooves (55) formed at the same side of the second adapter portion (52) are distributed on two ends of the second adapter portion (52) in the length direction of the second adapter portion (52), wherein the second anti-slip grooves (55) are symmetrically arranged with respect to a middle axis of the second adapter portion (52) extending in the length direction of the second adapter portion (52).

8. The end cover assembly (100) according to claim 5, further comprising:
a first thermal insulator (80) comprising a first lateral thermal insulation member (81) stacked on and connected to an inner lateral surface of the first adapter portion (42), wherein in a length direction of the end cover assembly (100), a projection of the first anti-slip groove (45) is at least partially located within a coverage of the first lateral thermal insulation member (81); and
a second thermal insulator (90) comprising a second lateral thermal insulation member (91) stacked on and connected to an inner lateral surface of the second adapter portion (52), wherein in the length direction of the end cover assembly (100), a projection of the second anti-slip groove (55) is at least partially located within a coverage of the second lateral thermal insulation member (91).

9. The end cover assembly (100) according to any one of claims 5 to 7, wherein:
in the width direction of the first adapter portion (42), a groove depth of the first anti-slip groove (45) is greater than or equal to 0.05 mm and less than or equal to 3 mm; and
in the width direction of the second adapter portion (52), a groove depth of the second anti-slip groove (55) is greater than or equal to 0.05 mm and less than or equal to 3 mm.

10. The end cover assembly (100) according to any one of claims 1 to 8, further comprising:
a first pole (60) serving as a positive pole and passing through the first perforation (413) of the first connection portion (41); and
a second pole (70) serving as a negative pole and passing through the second perforation (513) of the second connection portion (51), wherein:
the first pole (60) has lower electrical conductivity than the second pole (70); and
the first pole (60) has a greater diameter than the second pole (70).

11. An energy storage device (1000), comprising:
a housing (200);
an electrode assembly (300) mounted in the housing (200); and
the end cover assembly (100) according to any one of claims 1 to 10, the end cover assembly (100) being mounted at an opening (201) of the housing (200), and the first pin (40) and the second pin (50) being respectively located at two sides of the electrode assembly (300) in a length direction of the electrode assembly (300) and being electrically connected to the electrode assembly (300).

12. A power consumption apparatus (2000), comprising the energy storage device (1000) according to claim 11, wherein the energy storage device (100) is configured to supply power to the power consumption apparatus (2000).
